# EUROPEAN PATENT APPLICATION

(11) **EP 4 763 331 A1**
(43) Date of publication of application: **24.06.2026**
(21) Application number: 24222402.0
(22) Date of filing: 20.12.2024
(51) Int. Cl.: B01J 29/72, B01D 53/94, B01J 37/00

(54) **A SELECTIVE CATALYTIC REDUCTION (SCR) CATALYST**

(71) Applicant: Johnson Matthey Public Limited Company, London EC2V 7AD (GB)
(72) Inventor: The designation of the inventor has not yet been filed
(74) Representative: Johnson Matthey Public Limited Company

(57) **Abstract**

The present invention provides an all-active, extruded selective catalytic reduction (SCR) catalyst, comprising a metal-loaded zeolite and a binder in the form of silica-alumina, wherein the silica content of the silica-alumina is in the range of about 1% to 20% by weight. The invention further provides a method of preparing such an SCR catalyst comprising (a) forming a plastic mixture having a solids content of greater than 50 % by weight by mixing together a metal-loaded zeolite or a zeolite in an H+ or NH4+ form and an active metal precursor; an inorganic matrix component comprising silica-containing boehmite, wherein the silica content of the silica-boehmite is in the range about 1% to 20% by weight; an organic auxiliary agent, an aqueous solvent and optionally inorganic fibres; (b) moulding the plastic mixture into a shaped article; and (c) calcining the shaped article to form a solid catalyst body.

## Description

### FIELD OF THE INVENTION

This invention relates to an all-active, extruded selective catalytic reduction (SCR) catalyst, for treating a gas mixture comprising NOₓ. The invention further extends to a method for making the SCR catalyst of the invention.

### BACKGROUND TO THE INVENTION

Large numbers of catalytic converters used for the treatment of emissions from mobile and stationary sources are manufactured each year. Catalytic converters for use in motor-vehicles typically comprise a ceramic honeycomb monolith that is provided with channels for the through-flow of exhaust gases. The channels of the monolith may be coated with a catalytically active material (known as a "washcoat"). Alternatively, the extruded monolith itself is formed of a catalytically active material (referred to as an "all-active" extrudate or extruded catalyst).

To produce an all-active extruded catalyst, the catalytically active component is included in an extrusion composition whose rheological properties have been set so as to be suitable for the extrusion process. This extrusion composition is a plastic (i.e. easily shaped or mouldable), viscous composition. To set the desired rheological properties of the extrusion composition and also the mechanical properties of the extrudate, binders or additives are typically added to the extrusion composition. This plastic composition is then subjected to an extrusion process for preparing, for example, a honeycomb body. The so-called "green" body thus obtained is then subjected to a high temperature calcination treatment to form the finished extruded catalyst body.

All-active extrudates generally comprise a unitary structure in the form of a honeycomb having uniform-sized and parallel channels extending from a first end to a second end thereof. Generally, the channels are open at both the first and second ends - a so-called "flow through" configuration. Alternatively, channels at a first, upstream end can be plugged, e.g. with a suitable ceramic cement, and channels not plugged at the first, upstream end can also be plugged at a second, downstream end to form a wall-flow filter.

The selective catalytic reduction of nitrogen oxides (NOₓ) by ammonia (NH₃-SCR) is considered to be the most practical and efficient technology for the abatement of NOₓ from exhaust gases emitted from stationary sources and mobile engines, principally diesel engines for vehicles such as automobiles, trucks, locomotives and ships.

The inventors have, surprisingly, found that the production of an all-active extruded selective catalytic reduction catalyst including a binder component comprising silica-containing alumina (which may be referred to herein as a "silica-alumina"), wherein the silica content of the silica-alumina is in the range about 1% to 20% by weight, results in a catalyst that is more durable and therefore provides improved NOₓ conversion after hydrothermal and engine ageing.

### SUMMARY OF THE INVENTION

According to the present invention there is provided an all-active, extruded selective catalytic reduction (SCR) catalyst, for treating a gas mixture comprising NOₓ, the SCR catalyst comprising a metal-loaded zeolite and a binder in the form of silica-alumina, wherein the silica content of the silica-alumina is in the range of about 1% to 20% by weight. The silica content of the binder may be in the range of 1 to 15wt%, preferably 2 to 10wt%, more preferably 2.5 to 5wt%.

The metal-loaded zeolite of the invention may comprise a small pore zeolite (e.g. a zeolite having a maximum ring size of eight tetrahedral atoms), a medium pore zeolite (e.g. a zeolite having a maximum ring size of ten tetrahedral atoms) or a large pore zeolite (e.g. a zeolite having a maximum ring size of twelve tetrahedral atoms) or a combination of two or more thereof.

When the zeolite is a small pore zeolite, then the small pore zeolite may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore zeolite has a framework structure selected from the group consisting of CHA, LEV, AEI, AFX, ERI, LTA, SFW, KFI, DDR and ITE.

When the zeolite is a medium pore zeolite, then the medium pore zeolite may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore zeolite has a framework structure selected from the group consisting of FER, MEL, MFI, and STT.

When the zeolite is a large pore zeolite, then the large pore zeolite may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore zeolite has a framework structure selected from the group consisting of AFI, BEA, MAZ, MOR, and OFF.

In an embodiment of the invention, the metal-loaded zeolite has a framework type selected from AEI, AFT, AFX, CHA, DDR, ERI, ITE, KFI, LEV, LTA, SFW, BEA, MFI, FER, RHO and mixtures and/or intergrowths thereof. Preferably, the zeolite has a framework type selected from CHA, AEI or AFX, LTA or ERI, more preferably selected from CHA or AEI.

Small and medium pore zeolites, especially small pore zeolites, are preferred for use in SCR catalysts, since they may, for example, provide improved SCR performance and/or improved hydrocarbon tolerance.

In a preferred form of the invention, the zeolite is a small pore zeolite, e.g. CHA or AEI.

The zeolite of the present invention is a metal loaded zeolite. Examples of metal-loaded zeolites include iron-, copper- and palladium-loaded zeolites. In a preferred embodiment, the metal loaded zeolite has a metal selected from the group comprising cobalt, copper, iron, cerium, manganese, nickel, palladium, platinum, ruthenium and rhenium. In a particularly preferred embodiment, the metal is selected from Cu, Fe, V, Ce and Mn. In a most preferred embodiment, the metal is copper or iron, preferably copper. An advantage of using copper loaded zeolites is that such formulations have excellent low temperature NOₓ reduction activity (e.g. it may be superior to the low temperature NOₓ reduction activity of an iron exchanged zeolite). In a metal-loaded zeolite, the loaded metal is a type of "extra-framework metal", that is, a metal that resides within the zeolite and/or on at least a portion of the zeolite surface and does not include atoms constituting the framework of the zeolite.

In an embodiment of the invention, it is preferred to have a Cu-loaded or Fe-loaded zeolite, more preferably a metal loaded zeolite which is Cu-CHA or a Cu-AEI.

In an embodiment, the metal content of the metal-loaded zeolite is in the range 1 to 10wt%, preferably 2 to 5wt% based on the weight of the Cu-zeolite.

The all-active SCR catalyst may comprise:
a. 55 to 90wt%, for example 65 to 85wt% or 70 to 80wt%, of the metal-loaded zeolite;
b. 10 to 45wt%, for example 10 to 30wt% or 15 to 25wt% of a matrix component comprising the binder and optionally other additives, wherein the binder is present in the catalyst in an amount of at least 5wt%; and
c. 0 to 10wt%, for example 5-10wt% inorganic fibres.

The zeolite may have a silica-to-alumina ratio (SAR) of 5 to 200, 5 to 100, 10 to 80, or 5 to 30.

It has been found that the SCR catalyst according to the present invention may be produced by employing silica-containing boehmite in the preparation of the catalyst.

According to a second aspect of the present invention, there is provided a method for forming a catalyst article comprising:
(a) forming a plastic mixture by mixing together at least the following components:
   (i) a metal-loaded zeolite or a zeolite in an H⁺ or NH₄⁺ form and an active metal precursor;
   (ii) a matrix component comprising a silica-containing boehmite, wherein the silica content of the silica-boehmite is in the range about 1wt% to 20wt%;
   (iii) an organic auxiliary agent;
   (iv) an aqueous solvent;
   wherein the mixture has a solids content of greater than 50wt%;
(b) moulding the plastic mixture into a shaped article; and
(c) calcining the shaped article to form a solid catalyst body.

The metal-loaded zeolite may be pre-synthesised, according to known techniques, prior to use in step (a). Alternatively, a hydrogen- or ammonia-form zeolite may be employed in combination with an active metal pre-cursor, such that ion-exchange occurs in-situ to generate the metal-loaded zeolite. As used herein "active metal precursor" refers to a metal species which is capable of supplying an extra-framework metal to a zeolite.

The active metal precursor may comprise a salt of a transition metal, a salt of a noble metal or a salt of a rare earth metal. For example, the active metal precursor may comprise one or more salts of copper, manganese, nickel, cobalt, iron, palladium, platinum, cerium, yttrium, niobium, lanthanum, zinc, calcium, magnesium or any mixture of two or more thereof. Suitable salts include nitrates, sulphates, oxides, acetates, carbonates, hydroxides or oxalates.

Preferably, the active metal precursor is a metal carbonate, a metal hydroxide or a metal oxalate.

The matrix component comprises a silica containing boehmite, i.e. SiO₂-AlOOH, wherein the silica content of the silica-boehmite is in the range about 1wt% to 20wt%, preferably in the range 1 to 15wt%, more preferably 2 to 10wt%, most preferably 2.5 to 5wt%. Upon calcination of the shaped article as further described herein, the silica containing boehmite is converted to a silica containing alumina binder, i.e. SiO₂-Al₂O₃ having a silica content corresponding to that of the boehmite pre-cursor.

The matrix component may further comprises other additives such as additional binders or fillers which may provide structural integrity and or porosity to the final solid catalyst body. Some matrix components may also contribute to desirable properties to assist in manufacture. For example, clays are inherently plastic so their inclusion in the mixture formed in step (a) may enable or promote a desired level of plasticity.

The matrix component may comprise alumina or an alumina precursor, (in addition to the silica-boehmite) such as boehmite or bayerite, which forms alumina upon calcination.

Alternatively, or additionally, the matrix component may comprise a clay. Suitable clays include bentonites, fire clay, attapulgite, fullers earth, sepiolite, hectorite, smectite, kaolin, diatomaceous earth and mixtures of any two or more thereof.

The matrix component may further include inorganic fibres. Suitable inorganic fibres may be selected from the group consisting of carbon fibres, glass fibres, metal fibres, boron fibres, alumina fibres, silica fibres, silica-alumina fibres, silicon carbide fibres, potassium titanate fibres, aluminium borate fibres and ceramic fibres. Advantageously, inorganic fibres can improve the mechanical robustness of the calcined product.

The components to be mixed together in step (a) of the above method may include two or more metal-loaded zeolites or two or more zeolites in an H⁺ or NH₄⁺ form. Consequently, the resulting solid catalyst body formed in step (c) may comprise two or more different types of metal-loaded molecular sieve.

Where step (a) employs zeolite in the H⁺ or NH₄⁺ form and a metal-precursor, the relative quantities of the zeolite and the active metal precursor will depend on the targeted metal loading of the zeolite and the quantity of any metal precursors employed.

The term "aqueous solvent" as used herein refers to a solvent that contains water. Preferably, the aqueous solvent consists essentially of water. That is the aqueous solvent contains water but may also contain minor non-aqueous (e.g. organic or inorganic) impurities. The water may be deionised or demineralised water.

The plastic mixture formed in step (a) has a solids content of at least 50wt%, preferably at least 60wt%. By "solids content" it is meant the proportion of solid material present in the plastic mixture based on the total weight of the mixture. In particular, the plastic mixture may take the form of a paste. The solids content of the mixture is preferably in the range 60 to 80wt%, more preferably in the range 70 to 80wt%. For example, the solids content of the mixture may be about 75wt%.

Optionally, the components to be mixed together in step (a) may further include inorganic fibres. Suitable inorganic fibres may be selected from the group consisting of carbon fibres, glass fibres, metal fibres, boron fibres, alumina fibres, silica fibres, silica-alumina fibres, silicon carbide fibres, potassium titanate fibres, aluminium borate fibres and ceramic fibres. Advantageously, inorganic fibres can improve the mechanical robustness of the calcined product.

Preferably, components (i) and (ii) are in powdered or particulate form when employed in step (a).

Organic auxiliary agents may be used to improve processing or to introduce desirable attributes to the final solid catalyst body but are burnt out during the calcination step. Such materials can improve processing plasticity and/or introduce porosity in the solid catalyst body. Organic auxiliary agents suitable for use in step (a) may comprise at least one of acrylic fibres (extrusion aid and pore former), a cellulose derivative (plasticizer and/or drying aid), other organic plasticizers (e.g. polyvinyl alcohol (PVA) or polyethylene oxide (PEO)), a lubricant (extrusion aid) and a water-soluble resin.

In step (b) of the method of the invention, the mixture may be moulded via extrusion techniques well-known in the art. For example, the mixture may be moulded using an extrusion press or an extruder including an extrusion die.

Preferably, the shaped article takes the form of a honeycomb monolith. The honeycomb body may have any convenient size and shape. Alternatively, the shaped article may take other forms, such as a plate or pellets.

The shaped article may undergo a drying process prior to calcination in step (c). Thus, the method may further comprise drying the shaped article formed in step (b) prior to carrying out step (c). Drying of the shaped article may be carried out, via standard techniques, including freeze drying and microwave drying (for example, see WO2009/080155).

In step (c) of the method of the invention, the (optionally dried) shaped article formed in step (b) undergoes calcination to form the solid catalyst body. The term "calcine" or "calcination" refers to a thermal treatment step. Calcination causes solidification of the shaped article by removal of any remaining solvent as well as the removal (e.g. by burning) of the organic auxiliary agent.

Calcination of the shaped article may be carried out via techniques well known in the art. In particular, calcination may be carried out statically or dynamically (for example, using a belt furnace).

Where the shaped article takes the form of a honeycomb monolith, a flow through calcination technique may be employed, where heated gas is directed through the channels of the honeycomb.

Preferably, calcination step (c) is carried out at temperatures in the range 500 to 900°C, preferably 600 to 800°C.

Preferably, the shaped article is calcined for up to 5 hours, preferably 1 to 3 hours.

The calcination carried out in step (c) may comprise multiple thermal treatment steps, for example, the shaped article may be subjected to a first thermal treatment at a first temperature, and then subjected to a second thermal treatment at a second temperature.

Calcination may, for example, be carried out under a reducing atmosphere or an oxidizing atmosphere. Where multiple thermal treatment steps are employed, the different steps may be carried out under different atmospheres.

In terms of another embodiment of the invention, the present invention may be employed for treating a flow of a combustion exhaust gas. That is, the all-active SCR catalyst of the invention can be used to treat an exhaust gas derived from a combustion process, such as from an internal combustion engine (whether mobile or stationary), a gas turbine or a power plant (such as a coal or oil-fired power plant). A preferred application for the all-active SCR catalyst of the invention is in an exhaust system for an automotive vehicle. Thus, in a further aspect of the invention, there is provided a method of treating a NOₓ-containing exhaust gas comprising contacting a mixture of the exhaust gas and a nitrogen-containing reducing agent, such as ammonia, with a catalyst as described herein.

The SCR catalyst may be part of an exhaust gas treatment system wherein the all-active SCR catalyst of the invention is disposed downstream of a source of a nitrogenous reductant. Thus, according to a further aspect of the present invention, there is provided an exhaust system comprising: a source of nitrogenous reductant and an injector for injecting a nitrogenous reductant into a flowing exhaust gas, wherein the injector is disposed upstream from an SCR catalyst as defined herein. Preferably the upstream source of nitrogenous reductant is an ammonia or ammonia pre-cursor (e.g. urea) injector disposed upstream of the first SCR catalyst. The exhaust system may include a controller for metering the injection of nitrogenous reductant into the flowing exhaust gas. The exhaust system may include additional upstream or downstream components, such as additional catalytic components. For example, an oxidation catalyst (for example a diesel oxidation catalyst (DOC)) may be located upstream of the point of injecting the nitrogenous reductant into the exhaust gas and/or an ammonia slip catalyst (ASC) may be located downstream of the SCR catalyst.

According to a further aspect, there is provide a vehicle comprising an internal combustion engine and emission gas treatment system as defined above.

### BRIEF DESCRIPTION OF THE FIGURES

FIGURE 1: shows NOₓ conversion rates achieved by Comparative Example A (fresh and aged) and example 1 (fresh and aged) .
FIGURE 2: shows NOₓ conversion rates achieved by Comparative Example B (fresh and aged) and example 2 (fresh and aged) at selected inlet temperatures.
FIGURE 3: shows NOₓ conversion rates achieved by Comparative Example C (fresh and aged) and examples 3 to 5 (fresh and aged) at selected inlet temperatures.

### EXAM PLES

Aspects of the present invention will now be further described with reference to the following examples, which are illustrative, but not limiting of the invention. SCR catalysts were prepared according to the following procedures.

### Comparative Example A

The following components were used to prepare an SCR catalyst as a first comparative example: an H⁺ form CHA zeolite, copper carbonate (CuCO3.Cu(OH)2), clay minerals, powdered synthetic boehmite (non-silica containing), silicone resin and glass fibres. These were combined and then admixed in an aqueous solution having an acidic pH with glycerol, a plasticizer component and a polyethylene oxide at room temperature to form a mouldable paste. The mouldable paste had a solids content of about 60 wt.%.

The mouldable paste was extruded at 20°C into a flow-through honeycomb having a circular cross-section of 1 inch (2.54cm) diameter and a cell density of 500 cpsi(cells per square inch). The extruded honeycomb was freeze dried for several hours at 1.8mbar according to the method described in WO 2009/080155 and then calcined at a temperature of 700°C in a lab scale muffle oven to form a solid catalyst body.

The quantitative proportions of the starting materials were selected such that final solid catalyst body contained 75% by weight of a copper-exchanged zeolite, 11.5% by weight of alumina, 4wt% clay minerals 1.5wt% silicone resin and 8% by weight of glass fibres.

### Example 1 of the invention

A solid catalyst body was prepared according to the method described for Comparative Example A, except that the boehmite was replaced by a SiO₂-doped boehmite having a silica content of 5wt%.

### Comparative Example B

The following components, namely an H⁺ form CHA zeolite, copper carbonate (CuCO₃.Cu(OH)₂), clay minerals, diatomaceous earth, powdered synthetic boehmite (non-silica containing) and glass fibres were combined and then admixed in an aqueous solution having an acidic pH with glycerol, a plasticizer component and a polyethylene oxide at room temperature to form a mouldable paste. The mouldable paste had a solids content of about 60 wt.%.

In the same manner as described for Comparative Example A, the mouldable paste was extruded into a flow-through honeycomb which was then dried and calcined to form a solid catalyst body.

The quantitative proportions of the starting materials were selected such that final solid catalyst body contained 75% by weight of a copper-exchanged zeolite, 9% by weight of alumina, 3.5wt% clay minerals, 4.5wt% diatomaceous earth and 8% by weight of glass fibres.

### Example 2 of the invention

A solid catalyst body was prepared according to the method described for Comparative Example A, except that the boehmite was replaced by a SiO₂-doped boehmite having a silica content of 5wt %. (The solid catalyst bodies of Examples 1 and 2 had the same composition but were prepared in different batches).

### Comparative Example C

A solid catalyst body was prepared in the same was as for Comparative Example A except that cerium carbonate was also included in the mouldable paste and the quantitative proportions of the starting materials were selected such that final solid catalyst body contained 75% by weight of a copper-cerium-exchanged zeolite, 10.75% by weight of alumina, 1.75wt% clay minerals, 4.5wt% diatomaceous earth and 8% by weight of glass fibres .

### Example 3 of the invention

A solid catalyst body was prepared according to the method described for Comparative Example C, except that the boehmite was replaced by a SiO₂-doped boehmite having a silica content of 2.5wt%.

### Example 4 of the invention

A solid catalyst body was prepared according to the method described for Comparative Example C, except that the boehmite was replaced by a SiO₂-doped boehmite having a silica content of 5wt%.

### Example 5 of the invention

A solid catalyst body was prepared according to the method described for Comparative Example C, except that the boehmite was replaced by a SiO₂-doped boehmite having a silica content of 10wt%.

### Catalyst testing

Identical volume samples of Comparative Example A and Example 1 of the invention were tested in a synthetic catalytic activity test (SCAT) apparatus using the following inlet gas mixture at selected inlet gas temperatures: 300ppm NO (0% NO₂), 300ppm NH₃ (Ammonia to NOₓ ratio (ANR) = 1.0), 9.3% O₂, 7% H₂O, balance N₂, space velocity (SV) of 120000h⁻¹. The catalyst samples were tested both in a fresh condition and after hydrothermal ageing (at 10 vol.% H₂O for 50h at 750°C).

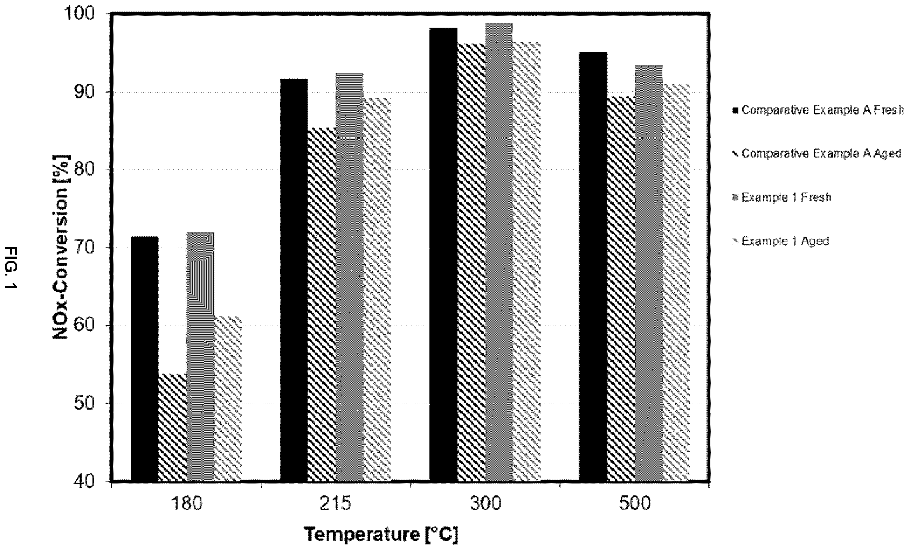

Figure 1 shows NOₓ conversion rates achieved by comparative example A and Example 1 of the invention at the selected inlet temperature. As demonstrated by the data shown in Figure 1, example 1 achieves better overall performance NOₓ compared to Comparative Example A, particularly after ageing.

Identical volume samples of Comparative Example B and Example 2 were tested in a synthetic catalytic activity test (SCAT) apparatus using the following inlet gas mixture at selected inlet gas temperatures: 300ppm NO (0% NO₂), 300ppm NH3 (Ammonia to NOx ratio (ANR) = 1.0), 9.3% O₂, 7% H₂O, balance N₂, space velocity (SV) of 120000h⁻¹. The catalyst samples were tested both in a fresh condition and after engine ageing. The engine ageing involved applying a combination of repeated World Harmonized Transient Cycles (WHTCs) and thermal load steps for a total of 260 hours. The WHTCs were operated at an ammonia to NOx ratio (ANR) of 1 and an average temperature of 252°C and each WHTC was followed by a thermal load step with a maximum temperature of 525°C.

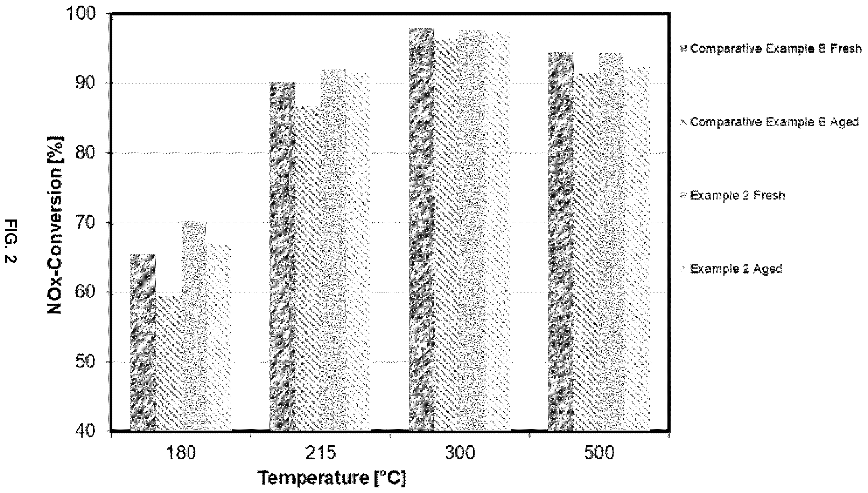

Figure 2 shows NOₓ conversion rates achieved by each sample at the selected inlet temperature. As demonstrated by the data shown in Figure 2, Example 2 achieves similar or better fresh performance compared to Comparative Example B and better performance after ageing at all temperatures.

Identical volume samples of Comparative Example C and Examples 3, 4 and 5 were tested in a synthetic catalytic activity test (SCAT) apparatus using the following inlet gas mixture at selected inlet gas temperatures: 300ppm NO (0% NO₂), 300ppm NH3 (Ammonia to NOₓ ratio (ANR) = 1.0), 9.3% O2, 7% H₂O, balance N₂, space velocity (SV) of 120000h⁻¹. The catalyst samples were tested both in a fresh and after hydrothermal ageing (10 vol.% H₂O for 50h at 650°C).

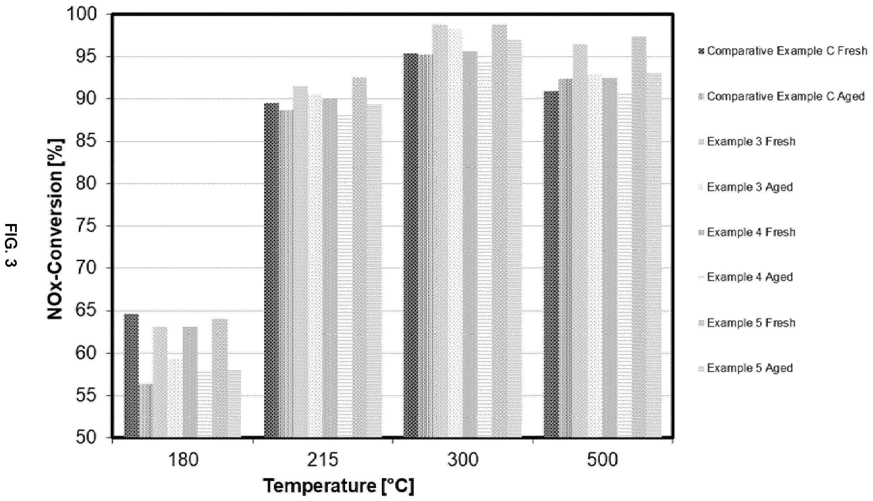

Figure 3 shows NOₓ conversion rates achieved by each sample at the selected inlet temperature. As demonstrated by the data shown in Figure 3, Example 4 achieves the best overall performance, with the smallest overall delta between fresh and aged performance.

## Claims

1. An all-active, extruded selective catalytic reduction (SCR) catalyst, for treating a gas mixture comprising NOₓ, the SCR catalyst comprising a metal-loaded zeolite and a binder in the form of silica-alumina, wherein the silica content of the silica-alumina is in the range of about 1% to 20% by weight.

2. The catalyst of claim 1 wherein the silica content of the binder is in the range 1 to 15wt%, preferably 2 to 10wt%, more preferably 2.5 to 5wt%.

3. The catalyst of claim 1 or 2, which comprises:
a. 55 to 90 wt% of the metal-loaded zeolite;
b. 10 to 45 wt% of a matrix component comprising the binder and optionally other additives, wherein the binder is present in the catalyst in an amount of at least 5wt%; and
d. 0 to 10 wt% inorganic fibres.

4. The catalyst of claim 3 wherein the matrix component further comprises alumina and/or clay.

5. The catalyst of claim 4 wherein the clay comprises bentonites, fire clay, attapulgite, fullers earth, sepiolite, hectorite, smectite, kaolin, diatomaceous earth and mixtures of any two or more thereof.

6. The catalyst of any preceding claim, wherein the metal-loaded zeolite is a zeolite which is ion-exchanged with a metal selected from the group consisting of copper, manganese, nickel, cobalt, iron, palladium, platinum, cerium, yttrium, niobium, lanthanum, zinc, calcium, magnesium or any mixture of two or more thereof.

7. The catalyst of any preceding claim, wherein the metal loaded zeolite is a Cu-loaded or Fe-loaded zeolite.

8. The catalyst as claimed in any preceding claim wherein the zeolite is a small pore zeolite.

9. The catalyst of any preceding claim, wherein the zeolite has a framework type selected from AEI, AFT, AFX, CHA, DDR, ERI, KFI, LEV, LTA, SFW and RHO.

10. The catalyst of claim 9 wherein the zeolite has a framework type selected from CHA, AEI or AFX, LTA or ERI, preferably selected from CHA or AEI.

11. The catalyst of any preceding claim where in the metal loaded zeolite is Cu-CHA or a Cu-AEI.

12. A catalyst as claimed in claim 11 wherein the Cu content of the Cu-loaded zeolite is in the range 2 to 5 wt% based on the weight of the Cu-zeolite.

13. A catalyst as claimed in any preceding claim wherein the zeolite has a silica-to-alumina ratio (SAR) of 5 to 200, 5 to 100, 10 to 80, or 5 to 30.

14. A method for forming a catalyst article comprising:
(a) forming a plastic mixture by mixing together at least the following components:
(i) a metal-loaded zeolite or a zeolite in an H⁺ or NH₄⁺ form and an active metal precursor;
(ii) matrix component comprising silica-containing boehmite, wherein the silica content of the silica-boehmite is in the range about 1% to 20% by weight;
(iii) an organic auxiliary agent;
(iv) an aqueous solvent;
wherein the mixture has a solids content of greater than 50 % by weight;
(b) moulding the plastic mixture into a shaped article; and
(c) calcining the shaped article to form a solid catalyst body.

15. A method as claimed in claim 14, wherein the silica content of the silica-boehmite is in the range 1wt% to 15wt%, preferably 2 to 10wt%, more preferably 2.5 to 5wt%.
